Europäisches Patentamt

European Patent Office

Office européen des brevets

(19)

(11) **EP 1 536 250 A1**

(12) **EUROPEAN PATENT APPLICATION**
published in accordance with Art. 158(3) EPC

(43) Date of publication:
**01.06.2005 Bulletin 2005/22**

(51) Int Cl.⁷: **G02B 3/00**, G03B 11/00

(21) Application number: **03798453.1**

(22) Date of filing: **22.09.2003**

(86) International application number:
**PCT/JP2003/012110**

(87) International publication number:
**WO 2004/029676 (08.04.2004 Gazette 2004/15)**

(84) Designated Contracting States:
**AT BE BG CH CY CZ DE DK EE ES FI FR GB GR HU IE IT LI LU MC NL PT RO SE SI SK TR**

(30) Priority: **25.09.2002 JP 2002279296**
**25.08.2003 JP 2003300043**

(71) Applicant: **SEIKO EPSON CORPORATION**
**Tokyo 160-0811 (JP)**

(72) Inventors:
• **SHIMIZU, Toshihiko,**
**c/o SEIKO EPSON CORPORATION**
**Suwa-Shi, Nagano 392-8502 (JP)**

• **ONISHI, Ichiro,**
**c/o SEIKO EPSON CORPORATION**
**Suwa-Shi, Nagano 392-8502 (JP)**
• **KOMATSU, Akira,**
**c/o SEIKO EPSON CORPORATION**
**Suwa-Shi, Nagano 392-8502 (JP)**
• **KOJIMA, Hiroshi,**
**c/o SEIKO EPSON CORPORATION**
**Suwa-Shi, Nagano 392-8502 (JP)**

(74) Representative: **Hoffmann, Eckart, Dipl.-Ing.**
**Patentanwalt,**
**Bahnhofstrasse 103**
**82166 Gräfelfing (DE)**

(54) **LENS WITH IR CUT FILTER, METHOD FOR MANUFACTURING SAME AND SMALL CAMERA**

(57)     An IR blocking dielectric multilayer film (3) for blocking infrared rays is provided on one of the surfaces of a plane-convex glass lens (2a, 2c) having a flat refractive surface (21) on one side and a convex refractive surface (22) on the other side. A multi-lens molding (26) having projections (24) of a convex lens integrally formed on the surface of a flat plate (25) is molded from glass, the IR blocking dielectric multilayer film (3) is provided on either one of the surfaces of the multi-lens molding (26), and the portion of the flat plate (25) of the multi-lens molding (26) having the dielectric multilayer film (3) formed thereon is cut into individual projections (24). A lens with an IR filter (1c) which is obtained is used as a condenser lens for compact cameras. In this arrangement, there are provided a lens with an IR filter and a method of manufacturing the same, and a compact camera, in which the cost, which becomes a problem when the lens with an IR filter used as a condenser lens and the like for compact cameras is made of glass, may be reduced.

F I G. 7

**Description**

Field of the Invention

The present invention relates to a lens with an infrared ray filter used for a compact camera to be built in a mobile phone or the like and a method of manufacturing the same and a compact camera using the lens with the infrared ray filter.

Description of the Related Art

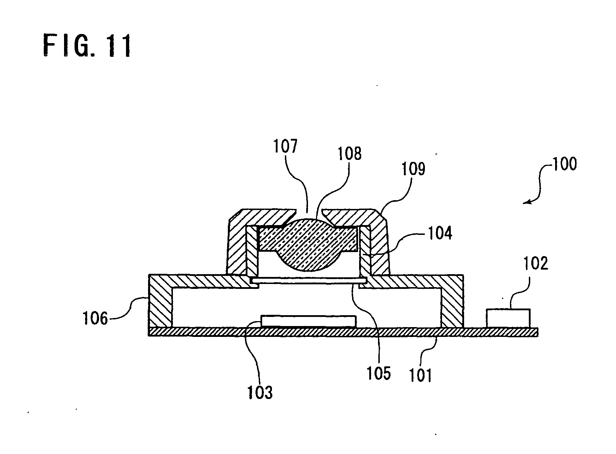

Recently, a compact camera is built into information technology devices such as mobile phones or laptop personal computers, so that image information taken by the compact camera can be obtained. An example of such compact camera is shown in Fig. 11.

As shown in Fig. 11, a compact camera 100 is provided with an electronic component 102 and a solid-state image sensing device module 103 mounted on a substrate 101, and a housing 106 having an IR (Infrared) filter 105 built in a lens barrel 104 is mounted to the substrate 101 so as to surround the solid-state image sensing device module 103. An outer cylindrical member 109 having an opening 107 which serves as aperture at one end, a condenser lens 108 assembled therein, and a thread formed on the inner surface thereof, is screwed onto a thread formed on the outer surface of the lens barrel 104. By adjusting the amount of screw-in of the outer cylindrical member 109, the distance between the condenser lens 108 and the solid-state image sensing device module 103 can be adjusted for focusing. It is fixed by means of adhesive agent after adjustment. The opening 107, the lens barrel 104, the condenser lens 108, the IR filter 105, the solid-state image sensing device module 103 are disposed along the optical axis.

In the compact camera 100, a light beam coming through the opening 107 is converged to the solid-state image sensing device module 103 by the condenser lens 108, and the light beam whose infrared component has been filtered out by the IR filter 105 forms an image on the solid-state image sensing device module 103, the solid-state image sensing device module 103 converts the received light beam into an electric signal, and the electric signal is converted into an image signal and output by the electronic component 102.

The solid-state image sensing device module 103 is has a good sensitivity not only to visible light, but also to infrared rays, and thus, the received infrared rays may result in lowering of resolution or deterioration of image. Therefore, in order to avoid infrared rays from impinging onto the solid-state image sensing device module 103, the IR filter 105 is disposed on the light incoming side of the solid-state image sensing device module 103.

The current information technology devices are strongly required to be downsized. The compact camera is not exceptional, and further downsizing is required. Therefore, JP 5-207350 A proposes to provide a dielectric multilayer film constituting the IR filter 105 directly on the condenser lens 108, and eliminate the IR filter 105 as a separate component so that downsizing is achieved.

The condenser lens 108 used in the compact camera is formed of plastic molded by injection molding in most cases for reducing weight and costs. When mounting the electronic components or the solid-state image sensing device module, a soldering process called "re-flow" in which solder is fused in a furnace heated to such a high temperature as about 290°C is included. Since the plastic lens has no heat resistance that can resist the high temperatures in re-flow soldering, the lens is mounted after the re-flow soldering process. Therefore, there arises a problem in that assembly productivity is lowered, and thus employment of a glass lens is desired in terms of increase in efficiency of assembly.

The lens with an IR filter disclosed in JP 5-207350 A is a double-convex lens having convex surfaces on both sides. In order to fabricate such double-convex lens from glass, highly accurate fabricating technology is required since the optical axes of both surfaces must be aligned accurately when molding, which may result in a problem of cost overrun.

In addition, since film-formation of the dielectric multilayer film is a troublesome work including the steps of disposing convex lenses on a substrate support of a dome shape such as a vacuum evaporator one-by-one, performing vacuum evaporation, and taking the convex lenses from the substrate support one-by-one, the cost for forming the dielectric multilayer film may disadvantageously increase.

In view of such circumstances, it is an object of the present invention to provide a lens with an IR filter in which the problem of cost overrun, which is caused when the lens with an IR filter used as a condenser lens or the like in compact cameras is formed of glass, may be eliminated.

It is another object of the present invention to provide a manufacturing method by which the glass lens with an IR filter can be manufactured at a lower cost.

It is further an object of the present invention to provide a compact camera using a low-cost glass lens with an IR filter.

Disclosure of the Invention

In order to achieve the objects described above, as a first aspect of the present invention, there is provided a lens with an IR filter including an IR blocking dielectric multilayer film for blocking infrared rays on one of the surfaces of a glass plane-convex lens having a flat refractive surface on one side and a convex refractive surface on the opposite side.

Since a so-called plane-convex lens is employed, it is not necessary to align the optical axis with respect to the flat refractive surface when the glass lens is molded. Therefore, by using a mold including a plane surface on one of the opposed surfaces of a cavity and a plane surface having a plurality of recesses for forming convex refractive surfaces on the other one of the opposed surfaces of the cavity, a multi-lens molding constructed of a plurality of continuously molded plane-convex glass lenses each having a flat refractive surface on one side and a convex refractive surface on the other side can be integrally molded. Therefore, since a number of lenses can be formed at once with a simple mold effectively, manufacture at a lower cost is realized.

Since the dielectric multilayer film is formed on the multi-lens molding, the film may be formed on a number of lenses at once by a film-forming method such as vacuum evaporation. Therefore, the cost for forming the dielectric multilayer film may be reduced.

In addition, since the multi-lens molding provided with the IR blocking dielectric multilayer film is cut into individual lenses by dice cutting, a number of plane-convex glass lenses may be produced efficiently, and hence manufacture at a lower cost is realized.

As a second aspect, the present invention provides a lens with an IR filter according to the first aspect described above, characterized in that the glass plane-convex lens is constructed in such a manner that projections constituting the convex surfaces of the convex lenses are formed integrally on one side of the flat plate.

The low-cost plane-convex lens obtained by cutting the multi-lens molding including a plurality of projections having convex refractive surfaces of the convex lenses provided integrally on one side of the flat plate into individual projections by dice cutting is constructed in such a manner that the projections constituting the convex surfaces of the convex lenses are formed integrally on one side of the flat plate.

As a third aspect, the present invention provides a lens with an IR filter according to the first or the second aspect described above, characterized in that the refractive surface of the convex surface is an axisymmetric aspherical surface in which the curvature radius decreases with the distance from the optical axis.

Since the convex lens of the plane-convex lens is formed into such an axisymmetric aspherical shape, a convex lens of which various aberrations are suitably corrected may be obtained, and hence a favorable image may be obtained.

As a fourth aspect, the present invention provides a lens with an IR filter according to the second aspect described above, characterized in that the geometric center of the contour of the flat plate coincides with the optical axis of the convex lens.

Since the geometric center of the contour of the lens coincides with the optical axis of the convex lens, when the lens is built in a compact camera or the like while aligning with the optical axis of the camera on the basis of the outer dimension of the lens, the optical axis of the lens is automatically aligned with the optical axis of the compact camera, and thus assembling work of the lens is easier in comparison with the case in which the lens is assembled so as to align the optical axis of the lens with the optical axis of the camera.

As a fifth aspect, the present invention provides a method of manufacturing a lens with an IR filter including a molding step for molding a multi-lens molding having a plurality of projections constituting refractive surfaces of the convex surfaces of the convex lenses formed integrally on the surface of the flat plate with glass, a film-forming step for providing an IR blocking dielectric multilayer film for blocking the infrared rays on either one of the surfaces of the multi-lens molding, and a cutting step for cutting the portions of the flat plate of the multi-lens molding provided with the IR blocking dielectric multilayer film into individual projections.

Since the multi-lens molding including the plurality of continuously molded glass plane-convex lenses each having a flat refractive surface on one side and a convex refractive surface on the other side is integrally molded, a number of lenses can be formed at once with a simple mold effectively, and hence manufacture at a lower cost is realized.

Since a dielectric multilayer film is formed on the multi-lens molding, the film may be formed on a number of lenses at once by a film-forming method such as vacuum evaporation. Therefore, the cost for forming the dielectric multilayer film may be reduced.

In addition, since the multi-lens molding provided with the IR blocking dielectric multilayer film is cut into an individual lens by dice cutting, a number of glass plane-convex lenses may be produced efficiently, and hence manufacture at a lower cost is realized.

As a sixth aspect, the present invention provides a method of manufacturing a lens with an IR filter according to the fifth aspect described above, characterized in that the multi-lens molding includes the projections being different in shape from each other.

Since the projections being different in shape from each other are provided on the single multi-lens molding, many types of plane-convex lens may be formed in one molding operation.

As a seventh aspect, the present invention provides a method of manufacturing a lens with an IR filter according to the fifth or sixth aspect described above, characterized in that alignment marks for aligning are transferred on the surface of the flat plate of the multi-lens molding in the molding step.

Provision of the alignment marks enables accurate cutting into individual projections while aligning the optical axis of the lens with the geometrical center of the contour using the alignment marks as references representing the cutting position. Therefore, when assembling the obtained plane-convex lens into the compact camera, it can be assembled with reference to the contour, and thus assembling work may be facilitated.

As an eighth aspect, the present invention provides a method of manufacturing a lens with an IR filter according to the seventh aspect described above, characterized in that the alignment mark is formed into a V-groove in cross section on the flat surface of the flat plate, and the cutting step is a step of cutting by a dicing blade so as to leave the portion in the vicinity of both edges of the V-groove.

When the alignment mark is provided for example at the corner of the multi-lens molding, the portion provided with the alignment mark becomes an extra portion separate from the lens portion, and thus glass material is wasted. However, by forming the alignment mark along the cutting line, additional location for providing the alignment mark is not necessary, and thus waist of glass material is prevented.

Since the flat plate is formed with the alignment mark being transferred into the shape of V-groove in cross section on the flat surface thereof, and is cut from the side of projections by the dicing blade which is narrower than the width of the groove, the dicing blade cuts the flat plate along the tapered surface of the V-groove and thus chipping hardly occurs on the cut surface of the glass, whereby the yield ratio is increased.

As a ninth aspect, the present invention provides a compact camera including a solid-state image sensing device for converting the received light beam into an electric signal, a housing covering around the solid-state image sensing device and having an opening, and a lens with an IR filter provided with an IR blocking dielectric multilayer film for blocking the infrared rays on either one of the surfaces of the glass plane-convex lens including a flat refractive surface on one side and a convex refractive surface on the other side as the entire portion or a part of a lens system for converging the light beam coming through the opening onto the solid-state image sensing device.

Since the compact camera employs the lens with an IR filter provided with the IR blocking dielectric multilayer film, the IR filter as a component may be eliminated, and thus downsizing may easily be realized. In addition, since a glass lens is employed, re-flow soldering may be performed with the lens mounted, and thus preferable assembling efficiency is achieved.

BRIEF DESCRIPTION OF THE DRAWINGS

Fig. 1   shows a lens with an IR filter according to the present invention, in which (a)-(c) are cross-sectional views, and (d) is a plan view of the lens shown in (c);

Fig. 2   is a graph showing an example of a aspherical shape, in which (a) shows a change of curvature in the radial direction, and (b) shows a shape in the radial direction;

Fig. 3   shows an optical path of a spherical convex lens in (a) and an optical path of an aspherical convex lens in (b);

Fig. 4   is a graph showing various aberrations in an example of the aspherical convex lens;

Fig. 5   is a cross sectional view showing an example of a structure of a compact camera according to the present invention in which the lens with an IR filter according to the present invention is employed;

Fig. 6   is a graph showing an example of a transmittance characteristic of the IR blocking dielectric multilayer film formed on the lens with an IR filter according to the present invention;

Fig. 7   from (1) to (5) illustrates method steps of manufacturing the lens with an IR filter according to the present invention, in which (a) is a plan view of an obtained lens, and (b) is a cross-sectional view of the obtained lens;

Fig. 8   is a plan view showing an example in which projections of different shape are formed in one piece of multi-lens molding;

Fig. 9　is a plan view of an example showing that alignment marks are formed on the multi-lens molding, in which (a) shows an example of the alignment marks provided at the corner, and (b) shows an example of the same formed along the cutting lines;

Fig. 10　from (a) to (d) illustrate cutting method steps when an alignment mark in the form of a V--groove is provided;

Fig. 11　is a cross-sectional view showing a construction of the conventional compact camera.

DESCRIPTION OF THE PREFERRED EMBODIMENTS

Embodiments of a lens with an IR filter and a method of manufacturing the same, and a compact camera according to the present invention will now be described. However, the present invention is not limited to the following embodiments.

The lens with an IR filter according to the present invention is provided with a dielectric multilayer film for blocking infrared rays on one of the surfaces of a plane-convex glass lens having a flat refractive surface on one side and a convex refractive surface on the opposite side.

The main intended use of the lens with an IR filter according to the present invention is a condenser lens constituting all or part of a lens system for allowing a solid-state image sensing device such as a compact camera or a monitor camera to be built into information technology devices such as mobile phones, laptop personal computers, or PDA (Personal Digital Assistant) to form an image.

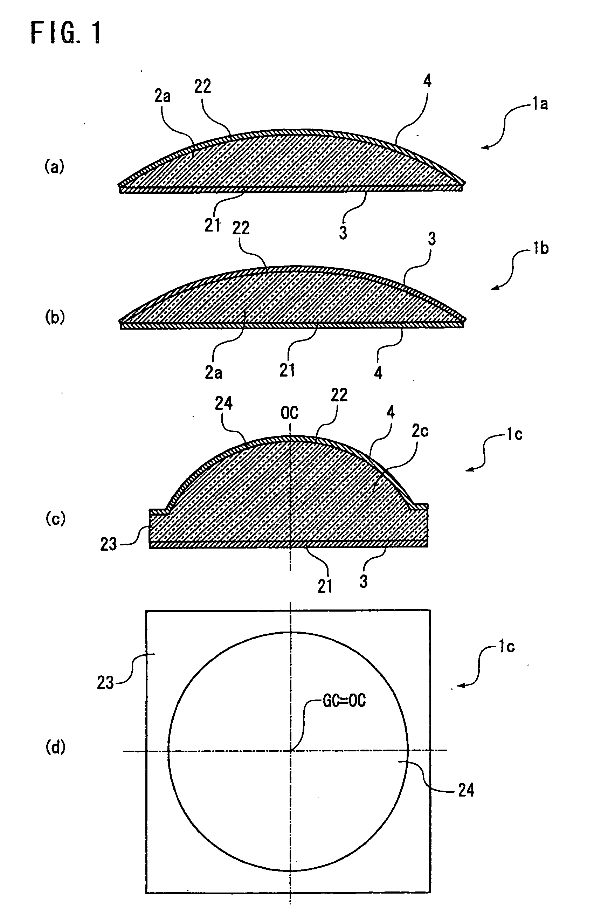

Fig. 1 shows a construction of the lens with an IR filter according to the present invention. The lens with an IR filter 1a shown in cross-sectional view in Fig. 1(a) is provided with an infrared light blocking dielectric multilayer film 3 for blocking the infrared rays on a flat refractive surface 21 on one side of a plane-convex glass lens 2a, and a reflection reducing coating 4 on the convex refractive surface 22 on the opposite side. A lens with an IR filter 1b shown in a cross-sectional view in Fig. 1(b) is provided with the reflection reducing coating 4 on the flat refractive surface 21 on one side of a plane-convex glass lens 2a, and the IR blocking dielectric multilayer film 3 for cutting the infrared rays on the convex refractive surface 22 on the opposite side.

A lens with an IR filter 1c shown in a cross-sectional view in Fig. 1(c) and in a plan view in Fig. 1(d) employs a plane-convex glass lens 2c formed with a dome-shaped glass projection 24 constituting the convex refractive surface 22 of the lens integrally on the center of one side of a substantially square shaped flat plate 23 formed of glass. The IR blocking dielectric multilayer film 3 is provided on the flat surface of the flat plate 23 of the plane-convex glass lens 2c on which the projection is not provided, and the reflection reducing coating 4 is provided on the projection 24 and the surface of the flat plate 23 on the opposite side.

The plane-convex glass lens 2c is preferably constructed in such a manner that the geometrical center GC of the substantially square contour of the flat plate 23 coincides with the optical axis (optical center) OC of the convex lens 22. The term "coincide" does not mean "completely coincide", but includes an allowable extent of error.

The lenses with an IR filter 1a, 1b, 1c each have the IR blocking dielectric multilayer film 3 on one surface. Therefore, the IR filter as a separate component can be eliminated, and thus cost reduction and downsizing may be realized by reduction of the number of camera components.

The lenses with an IR filter 1a, 1c shown in Fig. 1(a) and Fig. 1(c) are each provided on the flat refractive surface 21 with the IR blocking dielectric multilayer film 3 for filtering out infrared rays. Since the IR blocking dielectric multilayer film 3 performs filtering operation using multiple interference between the layers, it significantly depends on the incident angles, and thus the efficiency of IR blocking is lowered with increase in the incident angle. When an oblique ray impinges onto a convex surface, the incident angle of the ray with respect to the normal line of the convex surface is extremely large depending on the portion of the convex surface. In an extreme case, it may be coming up to a tangent line. However, when the oblique ray falls onto a flat surface, the incident angle is independent of the respective portion of the surface that is hit by the ray. Therefore, by providing the IR blocking dielectric multilayer film 3 on the flat refractive surface 21, dependency of the IR blocking effect on the incident angle may be minimized.

Uniform formation of the IR blocking dielectric multilayer film 3 on the curved surface having a large curvature radius is generally difficult. Because the lenses with an IR filter 1a, 1c according to the present invention have the IR blocking dielectric multilayer film 3 on the flat surface, an IR blocking dielectric multilayer film 3 being superior in characteristics may be formed. The plane-convex glass lens on which the IR blocking dielectric multilayer film 3 is provided is formed of a glass material that can resist high temperatures. Unlike a lens whose deformation temperature is low such as a plastic lens, a plane-convex glass lens can be kept at a high temperature when the IR blocking dielectric multilayer film 3 is formed on the plane-convex lens by a physical film forming method. Therefore, formation of high quality IR blocking dielectric multilayer films 3 is realized.

In addition, since it is a plane-convex glass lens, it can resist high temperatures in the re-flow soldering process, in which solder is fused in a furnace heated to a high temperature, when the electronic component or the solid-state image sensing device module is mounted. Therefore, re-flow soldering may be performed with the lens mounted to the compact camera. Therefore, efficiency of assembling process may be improved and thus a lower cost is realized.

Since the lens with an IR filter 1c shown in Figs. 1(c) and (d) can be manufactured by a manufacturing method according to the present invention that will be described later, it can be manufactured by a low-cost forming process and a low-cost film-forming process. Therefore, manufacture at a lower cost is realized.

The convex refractive surface 22 constituting a convex lens may be a spherical surface or may be an axisymmetric aspherical surface. In order to correct various aberrations suitably, the axisymmetric aspherical surface is preferable. The curved surface of the axisymmetric aspherical surface is generally represented by a high-degree polynominal as in equation (1) shown below:

$$Z = \frac{cr^2}{1 + \sqrt{1 - (1+K)c^2 r^2}} + \sum_n A_n r^n \tag{1}$$

where Z represents the coordinate of the direction of the optical axis of the lens, r represents the coordinate from the optical axis in the radial direction of the lens, c represents the curvature at the apex of the lens, and K, and An are aspherical coefficients.

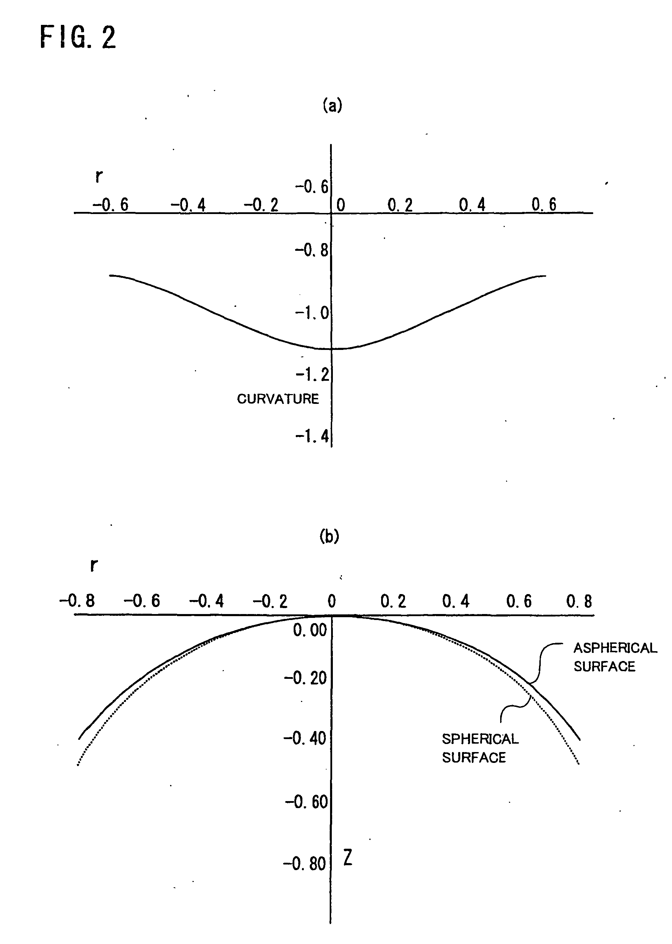

The curvature of the axisymmetric aspherical surface preferably decreases with increase in distance from the optical axis, as shown in Fig. 2(a). As shown in Fig. 2(b), the difference in shape between such axisymmetric aspherical surface, shown by a solid line, and a spherical surface, shown by a broken line, increases as the distance from the optical axis increases.

Glass material of refractive index $N_d$ = 1.5168 and Abbe number $v_d$ = 64.2 is actually used in an experiment, and a plane-convex glass lens 30 including a convex lens having a spherical refractive surface, and a plane-convex glass lens 1d including a convex lens having an axisymmetric aspherical refractive surface, both having a flat plate of 0.90 mm in thickness are assumed and their optical performances compared. The curvature radius of the spherical surface is -0.8943. The respective coefficients of the axisymmetric aspherical surface are K=-0.06002, $A_4$=0.09393, $A_6$=0.04028, $A_8$=0.52930, $A_{10}$=0.38733, $A_{12}$=0.22400. The distance from the plane of the flat plate of the plane-convex glass lens to the aperture is 0.15 mm.

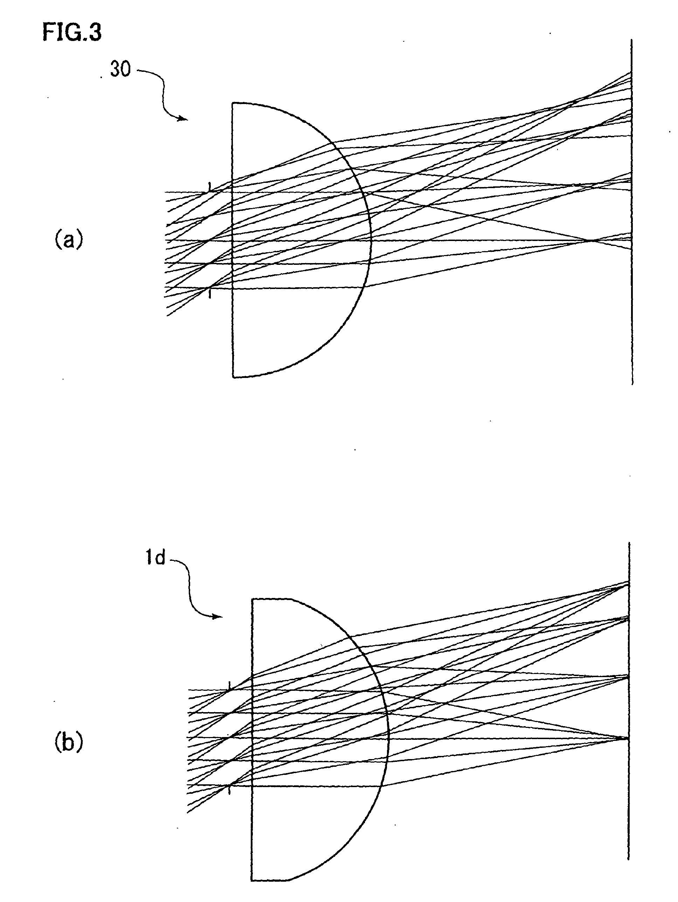

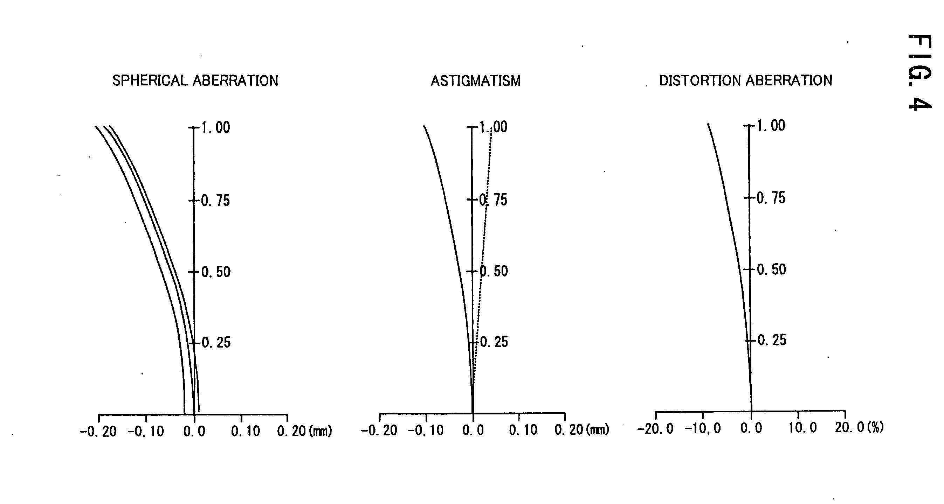

Fig. 3(a) shows the optical path of the spherical lens 30, and Fig. 3(b) shows the optical path of the axisymmetric aspherical lens 1d. The spherical aberration, astigmatism, and distortion of the aspherical lens 1d are shown in Fig. 4. It is clear from Fig. 3(a) that light beams passing through the spherical lens 30 are diffused on a focal surface due to aberration, and the image is significantly out of focus.

In contrast, light beams passing through the axisymmetric aspherical lens 1d are well corrected in spherical aberration, astigmatism, distortion, and so on as shown in Fig. 4, and as a consequence, as shown in Fig. 3(b), light beams are converged on the focal surface, and thus a desirable quality of image can be obtained.

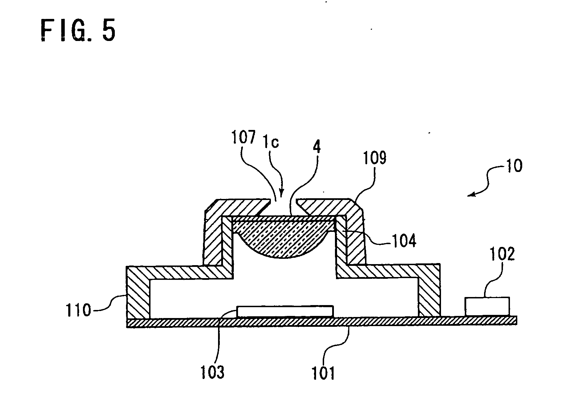

Fig. 5 shows the schematic cross-sectional construction of a compact camera 10 employing the lens with an IR filter 1c according to the present invention as a condenser lens. The compact camera 10 includes an electronic component 102 and a solid-state image sensing device module 103 which are mounted on a substrate 101. A housing 110 having a lens barrel 104 formed with a thread on the outer surface thereof is mounted on the substrate 101 so as to surround the solid-state image sensing device module 103. An outer cylindrical member 109 having an opening 107 which serves as aperture on one side, including the lens with an IR filter 1c of the present invention built in as a condenser lens, and being formed with a thread on the inner surface thereof is screwed into the thread formed on the outer surface of the lens barrel 104. By adjusting the amount of screw-in of the outer cylindrical member 109, the distance between the condenser lens 1c and the light receiving surface of the image sensing device module 103 can be adjusted. After adjustment both are fixed by means of an adhesive agent so as not to move. The opening 107, the lens barrel 104, the condenser lens 1c, and the image sensing device module 103 are disposed along the optical axis. Although the lens system of the compact camera 10 shown in Fig. 5 comprises only of the condenser lens 1c, another lens may be added, i.e., the condenser lens 1c constitutes all or part of the lens system.

The solid-state image sensing device module 103 is constructed of micro lenses, color filters, and solid-state image sensing devices such as a CCD or a CMOS, not shown. The micro lenses, the color filters, the solid-state image sensing devices such as the CCD or the CMOS are arranged in matrix. Each micro lens converges light beams converted by the respective condenser lens 1c onto the respective image sensing device, the color filter separates the light beam into three primary colors, and the solid-state image sensing device converts the received light beam into an electric signal.

In the camera 10 shown in Fig. 5, the lens with an IR filter 1c of the present invention is disposed as a condenser lens with the flat surface on which the IR blocking dielectric multilayer film 3 is provided directed to the light incoming side, and the convex surface directed to the solid-state image sensing device module 103. In contrast, even when the lens is disposed with the convex surface directed toward the light incoming side and the flat surface with the IR blocking dielectric multilayer film 3 directed to the solid-state image sensing device module 103, the function is not affected.

In the compact camera 10, the IR blocking dielectric multilayer film 3 provided on the flat surface of the condenser lens 1c as a lens system blocks the infrared rays in the light beam incoming from the opening 107, i.e., the condenser lens 1c makes the light beam substantially free of infrared rays and forms an image on the solid-state image sensing device module 103; the solid-state image sensing device module 103 converts the received light beam into an electric signal, and the electronic component 102 converts the electric signal to an image signal and outputs the same.

The lens with an IR filter 1c serves as a condenser lens and, in addition to that, it filters off the infrared rays. Therefore, the IR filter as a separate component may be eliminated from the compact camera 10. As a consequence, cost reduction and downsizing are realized. In addition, since the condenser lens 1c is formed of glass, re-flow soldering may be performed with the condenser lens 1c assembled. Therefore, efficiency of the assembling process may be improved. Furthermore, since the flat surface of the condenser lens 1c may be brought into intimate contact with the opening 107 of the outer cylindrical member 109, a dust-resistant device for the opening 107 is not specifically required.

In addition, in the lens with an IR filter 1c, as shown in Fig., 1(d), the geometrical center GC of the contour coincides with the optical axis OC of the convex lens 22. Therefore, the optical axis of the convex lens can be aligned with the optical axis of the compact camera 10 by assembling the lens with an IR filter 1c to the outer cylindrical member 109 on the basis of the outer dimension. Therefore, by forming a structure for positioning, such as a recess, in which the flat plate 23 of the lens with an IR filter 1c is fitted, alignment of the optical axis can be achieved only by fitting the lens with an IR filter 1c into the recess. Therefore, assembling efficiency is significantly improved. If the geometrical center GC of the contour does not coincide with the optical axis OC of the convex lens, the optical axis must be aligned for each and every lens when assembling the lens, and thus the assembling work becomes complex and thus productivity is lowered.

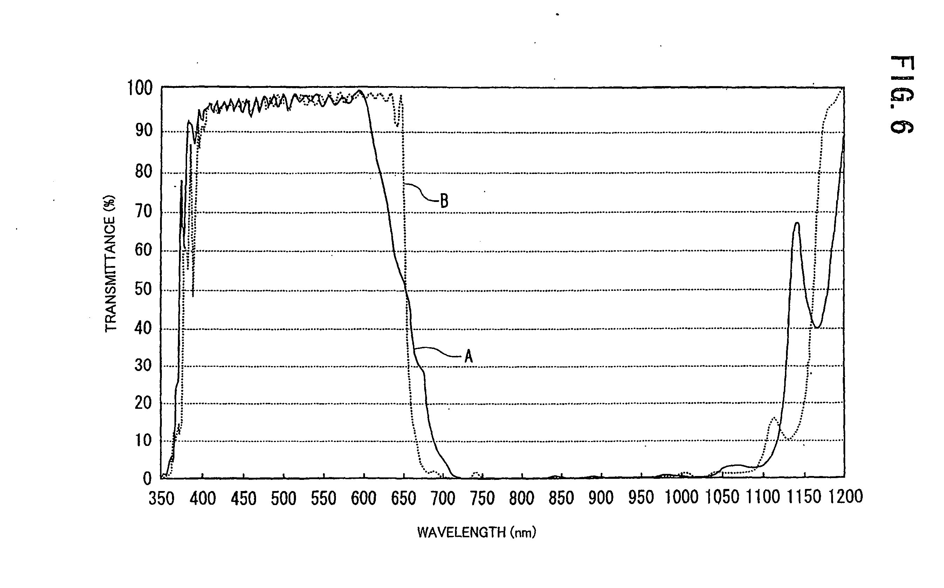

Fig. 6 shows an example of the transmittance characteristics of the IR blocking dielectric multilayer film 3 provided on one side of the lens with an IR filter according to the present invention. In Fig. 6, the transmittance characteristics of two types of IR blocking dielectric multilayer films are shown by a solid line A and a broken line B.

The transmittance characteristic A and the transmittance characteristic B are common in that a transmittance of almost more than 95% is exhibited in the region of visible light between 400 to 600 nm, in that the 50% transmittance is at about 650 mm, and in that they substantially block the infrared region between 725 to 1000 nm.

However, the falling portion in the vicinity of 650 nm of the transmittance characteristic A is less steep as compared with that of the transmittance characteristic B. More specifically, the width of the wavelength within which the transmittance is reduced from 90% to 10% in the range of medial wavelengths between 600 and 700 nm is preferably at least 40 nm, particularly at least 50 nm, most preferably at least 60 nm and not more than 100 nm. By making the falling characteristic in the vicinity of the medial wavelengths moderate as in the transmittance characteristic A, a transmittance characteristic that corresponds closely to the sensitivity of human eyes is achieved by reducing the intensity of visual light on the long wavelength side.

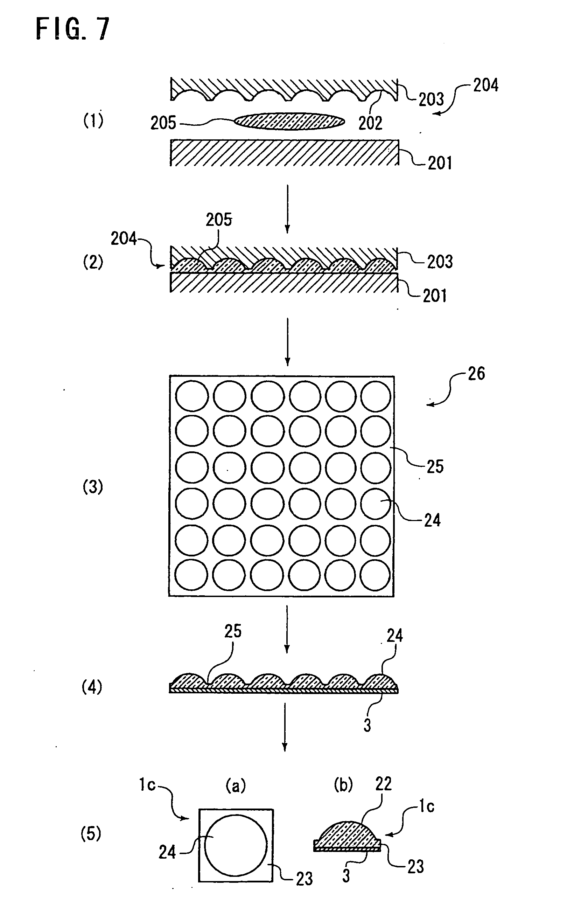

Subsequently, referring to the illustration in Fig. 7, a method of manufacturing a lens with an IR filter according to the present invention will be described. As shown in Fig. 7(1), a multi-lens mold 204 (a mold for forming multiple plane-convex lenses at a time) is employed for molding. It comprises two mold portions together constituting a cavity when closed. One mold portion 201 has a flat molding surface, and the other mold portion (dimple mold portion) 203 has a flat surface with a plurality of recesses 202 formed therein. The cavity formed when the dimple mold portion 203 and the flat mold portion 201 are placed one upon the other has a shape where projections are arranged in a matrix on a flat plate. Each recess of the dimple mold 203 has preferably a shape corresponding to the axisymmetric aspherical surface as described above.

In the molding process, as shown in Fig. 7(1), the mold portions 201 and 203 are opened and melted optical glass material 205 is filled into the cavity. The optical glass material 205 is selected considering the refractive index and Abbe number.

Subsequently, as shown in Fig. 7(2), the flat mold portion 201 and the dimple mold portion 203 are closed to distribute the optical glass material 205 all over the cavity, and in this state, the glass material 205 is cooled and solidified. The molding to which the shape of the cavity has been transferred has a shape where projections 24 are arranged in a matrix on a large flat plate 25 as shown in Fig. 7(3), and is called a multi-lens molding 26 in which the portions between the respective convex lenses 24 are connected by the flat plate 25.

Subsequently, as shown in Fig. 7(3), the mold portions 201, 203 are opened to take out the finished multi-lens molding 26. Then, as shown in Fig. 7(4), the IR blocking dielectric multilayer film 3 is formed on one side of the multi-lens molding 26 and a reflection reducing coating, not shown, is formed on the other side thereof.

The IR blocking dielectric multilayer film 3 has a construction in which layers having high refractive index and layers having low refractive index are laminated alternately on the multi-lens molding 26.

The material used for the high refractive index layers of the IR blocking dielectric multilayer film 3 includes $TiO_2$ (n=2.4), $Ta_2O_5$ (n=2.1), $Nb_2O_5$ (n=2.2), $ZrO_2$ (n=2.05), $Ta_2O_5$ (n=2.1) and so on, and the material used for the low refractive index layers includes $SiO_2$ (n=1.46), $Al_2O_3$ (n=1.63), $MgF_2$ (n=1.38) and so on. The refractive index differs depending on the wavelength, and the refractive index n mentioned here is that at a wavelength of 500 nm.

The basic design regarding the film thickness is represented generally as $(0.5H, 1L, 0.5H)^S$ as repetitive alternate layers in which the layers having high refractive index and the layers having the low refractive index, having the same optical thickness, are repetitively laminated alternately. Here, the wavelength near the center of the wavelengths which are required to be blocked is represented by a design wavelength $\lambda$, the thickness 1H of a layer with high refractive index (H) corresponds to the optical thickness of nd = $1/4\lambda$, and likewise, the thickness 1L of a layer with low refractive index (L) corresponds to the optical thickness nd = $1/4\lambda$ of the layer. The exponent S is called stack number and represents the number of repetitions, which means that the construction in parenthesis is repeated periodically S times. The number of layers actually laminated will be 2S+1 layers, and the larger the value of S is, the steeper the rising portion of the characteristic changing from reflection to transmission becomes. The value of S is selected from the range on the order from 3 to 20. The specific wavelength to be blocked is determined by these repetitive alternate layers.

In order to increase the transmittance in the transmitting band and to change unevenness of optical transmittance, called ripple, into a flat characteristic, an optimal design is achieved by changing the thickness of a couple of layers of the multilayer film located in the vicinity of the bottom of the film (facing the substrate) and in the vicinity of the top of the film (remote from the substrate). Therefore, the multilayer film is represented as "Substrate | 0.5LH ... HL(HL)$^S$ HL ... H, 0.5L". When using $TiO_2$ in the high refractive index layers, $SiO_2$, which is superior in environment resistance characteristics, is added in design as the outermost layer in many cases instead of using the high refractive index layer as the outermost layer. Since the layer that is in contact with the substrate may be deteriorated in characteristic due to reaction of $TiO_2$ with the substrate, the $SiO_2$, which is chemically stable, may be added to the first layer. The design of the multilayer film blocking filter may be implemented using commercially available software (Reference: OPTRONICS magazine, 1999, No. 5, p.175-190).

In order to form the high refractive index layers and the low refractive index layers alternately on the light transmitting substrate, a physical film forming method is generally employed. Though the normal vacuum evaporating method is also applicable, it is desirable to employ ion assisted evaporation, ion plating, or sputter deposition, which can control the refractive index of the film stably and can form a film which is less subjected to change of spectral characteristic with time due to change of storage and use environment. The vacuum evaporation method is a method of forming a thin film by heating and evaporating a thin film material in high vacuum environment, and accumulating the evaporated particles on the substrate. The ion plating is a method of ionizing the evaporated particles, and accelerating them by an electric field to attach them to the substrate, and includes an APS (Advanced Plasma Source), an EBEP (Electron Beam Excited Plasma) method, an RF (Radio Frequency) direct substrate application method (a method of performing reactive vacuum evaporation in a state in which a high-frequency gas plasma is generated in a film-forming chamber). The sputter deposition is a method of forming a thin film by allowing a thin film material to evaporate by sputtering which allows ion accelerated by an electric field to impinge on the thin film material for sputtering the thin film material, and allowing the evaporated particles to be accumulated on the substrate. Since the optical constant such as a refractive index of a layer to be formed varies depending on the film forming method or the film forming conditions, it is required to measure the optical constant of a layer to be formed accurately before mass-production.

The reflection reducing coating is constructed of a single layer or multiple layers of inorganic or organic material. A multilayer construction including an inorganic material and an organic material is also be applicable. Possible inorganic materials include substances such as $SiO_2$, SiO, $ZrO_2$, $TiO_2$, TiO, $Ti_2O_3$, $Ti_2O_5$, $Al_2O_3$, $Ta_2O_5$, $CeO_2$, MgO, $Y_2O_3$, $SnO_2$, $MgF_2$, $WO_3$, and so on. These substances may be used alone or in combination of two or more of them. Since the lens with an IR filter of the present invention is formed of heat-resistant glass as basic material, the type of material to be used for an inorganic coating is not specifically limited. When a multilayer construction is employed, the outermost layer is preferably formed of $SiO_2$.

As a multiple-layer inorganic coating, a four-layer construction including, from the substrate side, for instance, a $ZrO_2$ layer and an $SiO_2$ layer whose total optical film thickness is $\lambda/4$, a $ZrO_2$ layer whose optical film thickness is $\lambda/4$, and the uppermost $SiO_2$ layer whose optical film thickness is $\lambda/4$. $\lambda$ represents, the design wavelength, which is normally 520 nm.

Methods of forming an inorganic coating that can be employed here include, for example, vacuum evaporation, ion plating, sputter deposition, CVD, a method of separating out by a chemical reaction in saturated solution.

An organic coating may be formed, for example, of FFP (copolymer of tetrafluoroethylene-hexafluoropropylene), PTFE (Polytetrafluoroethylene), or ETFE (copolymer of ethylene-tetrafluoroethylene), and is selected considering the refractive index of material of cover glass. It may be formed by coating methods which are excellent in terms of mass production such as a spin coating method, a dip coating method as well as the vacuum evaporation method.

After the IR blocking dielectric multilayer film 3 and the reflection reducing coating have been formed, as shown in Fig. 7(5), the flat plate 25 is cut between the respective convex lenses 24 by a dicing blade of a dicing apparatus, not shown, in a cutting process so as to be separated into individual plane-convex glass lenses. Consequently, the lens with an IR filter 1c according to the present invention shown in Figs. 1(c) and (d) may be obtained.

According to the method of manufacturing a lens with an IR filter described above, the multi-lens molding 26 in which the plurality of projections constituting convex refractive surfaces of convex lenses are provided integrally on the surface of a flat plate may be formed integrally. Since one of the surfaces of the plane-convex glass lens is a flat plane and thus axial alignment with the convex surface is not necessary, such multi-lens molding 26 may be molded. Therefore, a number of lenses may be molded effectively at once with a simple mold, and thus manufacture at a lower cost is achieved.

In addition, since the dielectric multilayer film is formed on the integrally molded multi-lens molding, carrying in, installation, and carrying out of the film forming apparatus may be performed quickly, and hence productivity is improved, and the costs for forming the dielectric multilayer film may be reduced.

The multi-lens mold 204 may be constructed in such a manner that a plurality of types of convex lens are formed into the single multi-lens molding 26 by varying the shapes of the recessed surfaces of the dimple mold portion 203 from one another so that the surface configurations of the projections 24 are different from each other. In order to vary the shape of the convex lenses, the shape or the outer diameter of the aspherical surface may be changed.

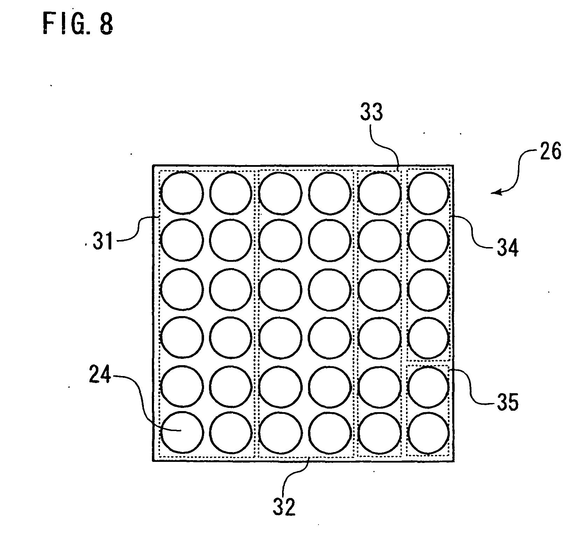

As shown in Fig. 8, for example, by forming the projections in the region shown within a broken line 31 into convex lenses of a first aspherical shape, forming the projections in the region shown within a broken line 32 into convex lenses of a second aspherical shape, forming the projections in the region shown within a broken line 33 into convex lenses of a third aspherical shape, forming the projections in the region shown within a broken line 34 into convex lenses of a fourth aspherical shape, and forming the projections in the region shown within a broken lines 35 as convex lenses of a fifth aspherical shape, five different designs of a convex lens may be formed into the single multi-lens molding 26. Then, by cutting it into individual projections, a number of types of plane-convex glass lens may be formed in one molding operation.

The multi-lens mold 204 may be formed with alignment marks required for positioning in the cutting process, and hence the alignment marks are formed on the flat plate 25 of the multi-lens molding 26 by transfer operation.

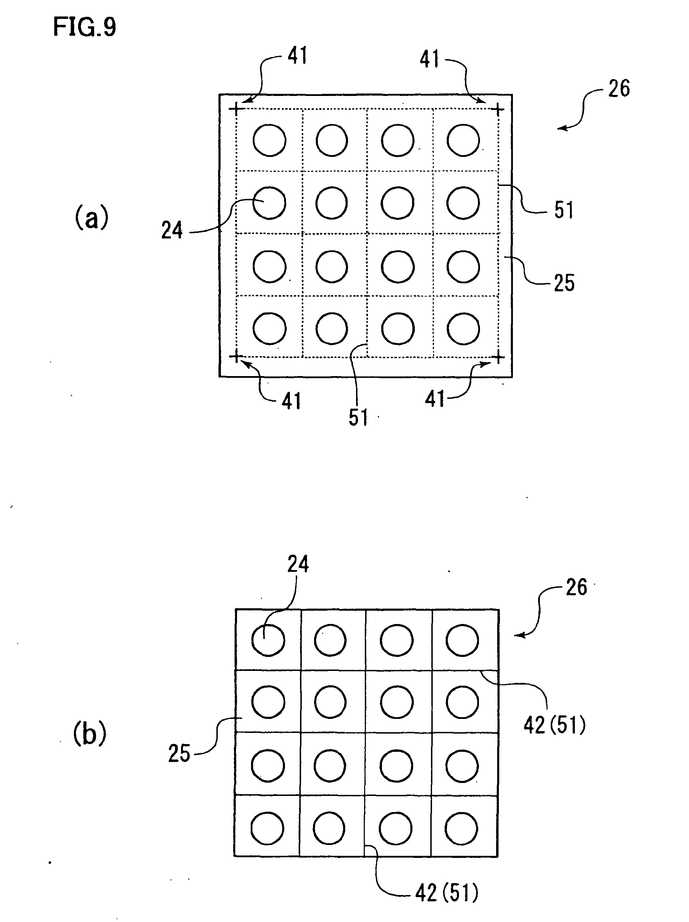

As shown in Fig. 9(a), a margin is formed on the outer periphery of the flat plate of the multi-lens molding 26 as the portions required as lenses, and cross-shaped alignment marks 41 may be formed at least at two corners of the margin by transfer operation from the mold. In this case, the mold for transferring the alignment mark 41 may be the flat mold portion 201 or the dimple mold portion 203. The transferred alignment mark 41 may be either of a projecting shape or a groove shape.

With the provision of the alignment marks 41 thereon, the multi-lens molding 26 can be cut into individual convex lenses automatically and accurately by a dicing apparatus, not shown. An alignment mark detecting unit provided on such dicing apparatus takes a picture of the multi-lens molding 26 on which an adhesive tape is adhered to the flat surface, from above by an image sensing device such as a CCD or the like and detects the alignment mark 41 from the obtained image data. Subsequently, the dicing apparatus programs cutting lines 51 as shown by broken lines in Fig. 9(a) to be cut by the dicing apparatus so that the optical axes of the projections coincide respectively with the geometrical centers of their contours using the alignment mark 41 as reference point of the dicing coordinates; the dicing apparatus cuts then automatically along the cutting lines 51 by the dicing blade.

Since the margins are provided on the outer periphery of the flat plate 25, in the case of the alignment marks 41 shown in Fig. 9(a), the portions at which the alignment marks 41 are formed come to have some useless margin. Therefore, as shown in Fig. 9(b), by forming alignment marks 42 along the cutting lines 51, such useless margin may be avoided.

When the alignment marks 42 are formed along the cutting lines 51, the mold for transferring the alignment marks 42 may be either of the dimple mold portion 203 or the flat mold portion 201. However, in order to prevent occurrence of chipping when dicing, a projection that can transfer a V-groove having a width slightly wider than the width of the dicing blade is preferably formed on the flat mold portion 201.

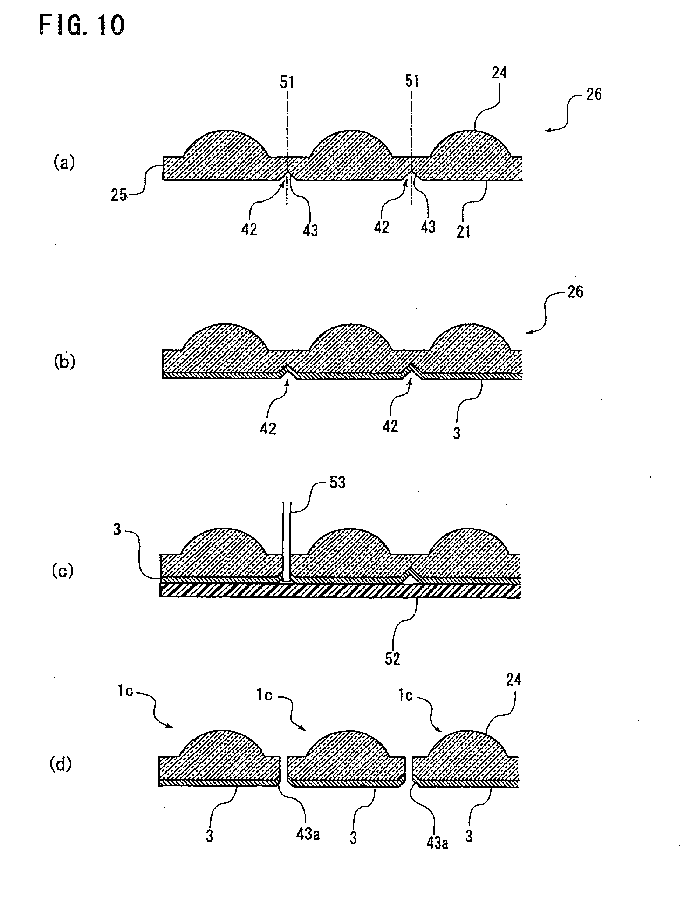

Fig. 10 illustrates a cutting process for the case that alignment marks in the shape of a V-groove are formed along the cutting lines on the flat surface of the flat plate.

As shown in Fig. 10(a), the multi-lens molding 26 is formed with the alignment marks 42 in the shape of V-grooves 43 on the flat surface of the flat plate 25 by transfer from the flat mold portion 201. The bottom center of the V-grooves 43 of the alignment marks 42, which have at an acute angle, coincides with the respective cutting line 51 to be cut so that the geometrical center of the contour coincides with the optical axis of the convex lenses. The maximum width of the V-groove 43 is slightly wider than the dicing blade.

As shown in Fig. 10(b), the IR blocking dielectric multilayer film 3 is provided on the flat surface of the multi-lens molding 26.

As shown in Fig. 10(c), the multi-lens molding 26 includes an adhesive tape 52 adhering to the flat surface thereof and is installed in the dicing apparatus, not shown. The dicing apparatus takes a picture of the multi-lens molding from above with an image sensing device such as the CCD, the alignment marks 42 are detected from the obtained image data, and the center of a detected alignment mark 42 is programmed as a respective cutting line 51. Then, the dicing apparatus cuts automatically along the centerline (cutting line 51) of the alignment mark 42 by a dicing blade 53 from the convex lens side. In this case, since the width of the dicing blade 53 is narrower than the maximum width of the V-groove 43, it is possible to dice with the distal edge of the dicing blade 53 projected into the V-groove 43 so that the distal edge of the dicing blade 53 does not reach the adhesive tape 52. By removing the respective convex lens from the adhesive tape 52 after the individual projections have been cut off by dicing operation, the lenses are divided into the individual lenses 1c as shown in Fig. 10(d). Since the width of the dicing blade 53 is smaller than the maximum width of the V-groove 43, the portion of the V-groove 43 in the vicinity of both end edges remains in the shape of a chamfer 43a.

According to the dicing operation as described above, the tip of the dicing blade 53 enters into the V-groove 43 and cuts the flat plate. When the tip of the dicing blade cuts the glass plate at once, there is a case in which chipping may occur on the cutting surface when the tip of the dicing blade 53 breaks the flat surface of the glass plate. In the above-described dicing operation, since the dicing blade 53 cuts in the tapered V-groove 43, the cutting surface can hardly be chipped. Therefore, generation of defective goods may be prevented and hence the yield ratio is increased.

Since the adhesive tape 52 is not diced, attaching of adhesive agent of the adhesive tape 52 to the dicing blade 53 may be prevented and thus a disadvantage such as damage or contamination of the plane-convex glass lens 1c due to attachment of glass chips can be avoided.

Since the V-groove 43 described above brings about the effects described above, as long as the cross section of the groove is substantially V-shaped, any particular V-shape is not critical for the invention.

Industrial Applicability

A lens with an IR filter according to the present invention can be used as a condenser lens for compact cameras such as used in mobile telephones or the like.

A method of manufacturing the lens with an IR filter according to the present invention can manufacture the lens with an IR filter that can be used as a condenser for compact cameras used in mobile telephones or the like.

A compact camera according to the present invention may be used, for example, in mobile telephones.

**Claims**

1. A lens with an IR filter comprising an IR blocking dielectric multilayer film for blocking infrared rays on one of the surfaces of a plane-convex glass lens having a flat refractive surface on one side and a convex refractive surface on the opposite side.

2. A lens with an IR filter according to Claim 1, **characterized in that** the plane-convex glass lens is constructed in such a manner that projections constituting the convex surfaces of convex lenses are formed integrally on one side of a flat plate.

3. A lens with an IR filter according to Claim 1 or Claim 2, **characterized in that** the convex refractive surface is an axisymmetric aspherical surface in which the curvature radius decreases with the distance from the optical axis.

4. A lens with an IR filter according to Claim 2, **characterized in that** the geometric center of the contour of the flat plate coincides with the optical axis of the convex lens.

5. A method of manufacturing a lens with an IR filter comprising:

   a molding step for molding a multi-lens molding having a plurality of projections constituting convex refractive surfaces of convex lenses formed integrally on the surface of a flat plate from glass;
   a film-forming step for providing an IR blocking dielectric multilayer film for blocking infrared rays on either one of the surfaces of the multi-lens molding; and
   a cutting step for cutting the flat plate of the multi-lens molding provided with the IR blocking dielectric multilayer film into individual portions each having a respective projection.

6. A method of manufacturing a lens with an IR filter according to Claim 5, **characterized in that** at least some of the projections of the multi-lens molding differ in shape from each other.

7.  A method of manufacturing a lens with an IR filter according to Claim 5 or Claim 6, **characterized in that** alignment marks for aligning are transferred on the surface of the flat plate of the multi-lens molding in the molding step.

8.  A method of manufacturing a lens with an IR filter according to Claim 7, **characterized in that** the alignment marks are transferred along cutting lines to be cut in the cutting step on the flat surface of the flat plate into a V-groove in cross-section, and the cutting step is a step of cutting by a dicing blade so as to leave the portion in the vicinity of both edges of the V-groove.

9.  A compact camera comprising:

    a solid-state image sensing device for converting a received light beam into an electric signal;
    a housing covering the solid-state image sensing device and having an opening; and
    a lens as defined in claim 1 as all or part of a lens system for converging the light beam coming through the opening onto the solid-state image sensing device.

# FIG. 1

# FIG. 2

(a)

(b)

**FIG.3**

(a)

(b)

# FIG. 4

FIG. 5

FIG. 6

# FIG. 7

(1)

(2)

(3)

(4)

(5)

(a)

(b)

FIG. 8

FIG.9

(a)

(b)

# FIG. 10

(a)

(b)

(c)

(d)

# FIG. 11

## INTERNATIONAL SEARCH REPORT

| International application No. |
|---|
| PCT/JP03/12110 |

**A. CLASSIFICATION OF SUBJECT MATTER**
Int.Cl$^7$ G02B3/00, G03B11/00

According to International Patent Classification (IPC) or to both national classification and IPC

**B. FIELDS SEARCHED**

Minimum documentation searched (classification system followed by classification symbols)
Int.Cl$^7$ G02B3/00, G03B11/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2000-131521 A (Olympus Optical Co., Ltd.),<br>12 May, 2000 (12.05.00),<br>Par. Nos. [0062] to [0068], [0079] to [0114];<br>Figs. 6, 15, 19<br>(Family: none) | 1<br>2-9 |
| Y | JP 2002-40234 A (Matsushita Electric Industrial<br>Co., Ltd.),<br>06 February, 2002 (06.02.02),<br>Full text; all drawings<br>(Family: none) | 1-9 |
| Y | JP 11-295576 A (CBC Kabushiki Kaisha),<br>29 October, 1999 (29.10.99),<br>Par. No. [0016]; Fig. 4<br>(Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 November, 2003 (28.11.03) | 09 December, 2003 (09.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 536 250 A1**

<table>
<tr><td colspan="2" align="center"><strong>INTERNATIONAL SEARCH REPORT</strong></td><td>International application No.<br>PCT/JP03/12110</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 10-10394 A (Chugai Optronics Kabushiki Kaisha), 16 January, 1998 (16.01.98), Par. Nos. [0009] to [0012]; Fig. 1 (Family: none) | 1-9 |
| A<br>Y | JP 2000-37787 A (Konica Corp.), 08 February, 2000 (08.02.00), Full text; all drawings (Family: none) | 1-4<br>5-9 |

Form PCT/ISA/210 (continuation of second sheet) (July 1998)